# EUROPEAN PATENT SPECIFICATION

(11) **EP 2 852 772 B1**
(45) Date of publication and mention of the grant of the patent: **12.07.2017**
(21) Application number: 13726607.8
(22) Date of filing: 13.05.2013
(51) Int. Cl.: F16D 41/10, F16D 41/18, F16D 43/02, F16D 43/04

(54) **OVER-RUNNING CLUTCH**
FREILAUFKUPPLUNG
EMBRAYAGE À ROUE LIBRE

(30) Priority: 23.05.2012 NL 1039622
(43) Date of publication of application: 01.04.2015
(73) Proprietor: Forest Group Nederland B.V., 7418 EZ Deventer (NL)
(72) Inventor: BOSGOED, Henricus Wilhelmus Frederikus, NL-7433 CX Schalkhaar (NL)
(74) Representative: Lips, Hendrik Jan George
(86) International application number: PCT/NL2013/000027
(87) International publication number: WO 2013/176539

(56) References cited:
- WO-A1-00/05467
- GB-A- 499 608
- US-A- 3 300 003
- US-A1- 2012 098 367

## Description

The invention relates to an over-running clutch serving for coupling a motoric driven shaft to a driven element in which said element can freely rotate when the motor is switched off.

Such clutches are used for different purposes and are known in various embodiments.

In this case the problem might arise that parts are wearing off caused by it that too much friction is present between given parts.

Now the object of the invention is to provide a clutch in which this problem will not arise either in a less degree. This object is achieved by the over-running clutch according to claim 1. In case of this embodiment of said clutch the coupling members will be pressed outwardly b y said flattened portion of said shaft when this is rotated, such that said cams of it will be pressed into the hollows of said surrounding cylindrical drive portion, such that this drive portion will rotate together with said shaft.

When said motor is switched off and said drive portion is rotated directly either indirectly by means of said driven element, said coupling members will be pressed out of said hollows, such that said driven element can be rotated and will be free to rotate. According to the invention at least a part of the contact plane of a disk, directed to a coupling member, is making an angle between 4 and 10° with the contact surface of said coupling member extending square to the ceterline of said shaft, such that said contact surface in the direction of the centerline of said shaft is at increasing distance of the contact surface of said coupling member. It has appeared that by this said coupling members will easily turn over when the shaft is stopped and by this will leave said hollows of said cylindrical collar of said drive part.

It might be remarked that US 3 300 003 A shows a clutch in which a disk is mounted on the driven shaft and is provided with an extending portion with two planes for receiving a key of a split washer pawl. The centre of gravity of said disk does not coincide with the centreline of the shaft such that when the shaft is rotated by the electric motor said pawl will be moved by an eccentric force and a tooth of it will engage a tooth of a ratchet gear. Obviously this clutch can only be driven in one direction of rotation and the dimensions and mass of said disk must be sufficient to deliver a given eccentric force. As known an eccentric force and mass are less wanted in case of rotating parts.

Further GB 4 99 608 A shows a clutch in which the shaft is provided with some inclined flat surfaces against which parts are lying which, when said shaft is rotated in a given direction, will be pressed outwardly against an inner cylindrical wall of the driven element. So this element must be driven by a fractional force, such that wearing off might occur.

The invention is further elucidated with the help of an embodiment, shown in the drawing, in which:
Fig. 1 shows a side view of a fixedly positioned electric motor, the driven shaft of this being connected to an over-running clutch according to the invention which at its other side is coupled to a drive portion forming part of the element which has to be driven;
Fig. 2 shows a cross-section, at a larger scale, of said clutch with the driven shaft and of the drive portion forming part of said element which has to be driven;
Fig. 3 shows a cross-section of the clutch in the uncoupled position; and
Fig. 4 shows a cross-section in the coupled position.

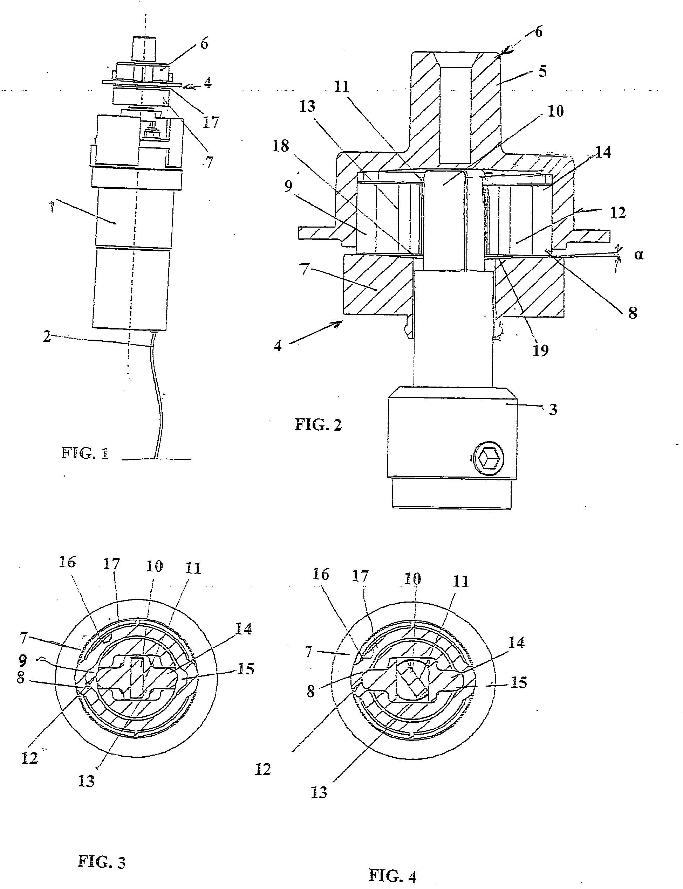

Fig. 1 shows the electric motor 1 which, in a way not further indicated, is fixedly positioned and to which electric energy can be provided via the cable 2.

As shown in fig. 2 the shaft of the electric motor 1 can be connected to the shaft 3 of the over-running clutch 4 which at its other end is coupled to the drive portion 5, forming part of the driven element 6, which is not further shown here.

The shaft 3 is provided with a disk 7, being rotatable on it, a cylindrical collar 8 being present on the contact surface 18 of said disk and with two opposite positioned sleeves 9 in it (see also the figures 3 and 4). At the place of said collar 8 and the sleeves 9 said shaft 3 is provided with a flattened portion 10, in such a way that two contact surfaces 11 are shaped.

As in particular shown in the figures 3 and 4 near each of the surfaces 11 a coupling element 12 is present, the plane 13 of which can be in contact with a surface 11 of the portion 10 of said shaft 3. Said coupling element 12 is provided with a cam 14, which can extend itself through said sleeve 9.

As shown in fig. 2 the contact surface 18 of said disk 7 can make an angle a with the opposite lying contact surface 19 of a coupling element 12, in such a way that the distance between the surfaces 18 and 19 is increasing towards the shaft 3.

Fig. 3 shows the position in which the shaft 3 is stationary and the planes 13 of said coupling elements 12 are lying against the surfaces 11 of the shaft 3, whilst said cams 14 are positioned in said sleeves 9.

When now the shaft 3 is driven by means of said electric motor 1 the position will be obtained as shown in fig. 4. By rotating the shaft 3 and so the flattened portion 10 of it, said coupling elements 12 are pressed outwardly and the cams 14 of it are received in hollows 15, provided in the inner wall 16 of a cylindrical portion 17, connected to the driven portion 5 mentioned above and forming part of the driven element 6.

When said electric motor 1 is switched off in one way or another said motor can be programmed such that the shaft 3 of it turns back over a given angle in the opposite direction such that the shaft 3 will stand still in such a position that the surfaces 11 of the portion 10 of the shaft 3 will lie parallel to the planes 13 of the coupling element 12.

Rotating of the element 6 will take care for it that the surfaces 13 of the elements 12 are pressed against the planes 11 of the portion 10 of the shaft 3, such that the position is reached as shown in fig. 3. To reach this position and to maintain this, it is favourable that, as described above, the plane 18 of the disk 7 encloses an angle of 4 to 10° with the surfaces 19 of said coupling elements 12.

It will be obvious that only one possible embodiment of an over-running clutch according to the invention is shown in the drawing and is described above and that many modifications can be applied without leaving the inventive idea as this is indicated in the accompanying claims.

## Claims

1. Over-running clutch (4) for connecting a motor-driven shaft (3) to a driven element (6) in which when the motor (1) is switched off, said driven element (6) can rotate freely, said driven shaft (3) being provided with planes (11) for cooperating with opposite positioned coupling members (12) being mounted on a disk (7) which is rotatable mounted on the driven shaft (3), such that they can move inward and outward, such that in the outward position said coupling members (12) are partly received in a receiving member connected to said driven element (6), whereby said motor-driven shaft (3) is provided with a flattened portion (10) with two flat contact surfaces (11) opposite each other, against each of said contact surfaces a flat contacting plane (13) of a coupling member (12) can lie when the motor (1) is switched off, **characterized in that**, when the motor is switched on the shaft will rotate over a given angle such that said coupling members (12) are moved outward and a cam (14) of each coupling member (12) will be received in a hollow (15) provided in the inner wall (16) of the receiving member in the shape of a cylindrical part (17) connected to said driven element (6), at least a part of the contact plane (18) of said disk (7), contacting a coupling member (12), is making an angle between 4 and 10° with the contact surface (19) of said coupling member (12) running square to the centreline of said shaft (3), such that said contact surface (18) in the direction of the centreline of said shaft (3) is at increasing distance of the contact surface (19) of said coupling member (12).

## Patentansprüche

1. Freilaufkupplung (4)
zur Anbindung einer motorgetriebenen Welle (3) an ein angetriebenes Element (6), in welchem das angetriebene Element (6) bei abgeschaltetem Motor (1) frei rotieren kann, wobei die angetriebene Welle (3) über Flächen (11) verfügt, welche für das Zusammenspiel mit gegenüberliegend angeordneten Kupplungsstäben (12) vorgesehen sind, die auf einer Scheibe (7) montiert sind, welche drehbar auf der angetriebenen Welle (3) befestigt ist, und zwar derart, dass sie sich nach innen und nach außen bewegen können, wobei die Bewegung derart erfolgt, dass die Kupplungsstäbe (12) in der Außenstellung teilweise in einem Aufnahmeelement aufgenommen werden, das eine Verbindung mit dem angetriebenen Element (6) aufweist, wobei die motorgetriebene Welle (3) ein abgeflachtes Teilstück (10) mit zwei sich gegenüberliegenden flachen Auflageflächen (11) besitzt, so dass an jeder der genannten Auflageflächen eine flache Anlagefläche (13) eines Kupplungsstabs (12) anliegen kann, wenn der Motor (1) abgeschaltet ist, und zwar **dadurch gekennzeichnet, dass** die Welle bei eingeschaltetem Motor derart in einem bestimmten Winkel rotiert, dass die Kupplungsstäbe (12) nach außen bewegt werden und eine Nocke (14) eines jeden Kupplungsstabs (12) in einer Mulde (15) aufgenommen wird, die in der Innenwand (16) des Aufnahmeelements in Form eines zylindrisch ausgeführten Bauteils (17) vorgesehen ist, welches an das angetriebene Element (6) angebunden ist, wobei zumindest ein Teilstück der Kontaktfläche (18) der Scheibe (7), die mit einem Kupplungsstab (12) in Berührung kommt, einen Winkel zwischen 4 und 10° mit der Kontaktfläche (19) des Kupplungsstabs (12) bildet, der rechtwinklig zur Mittellinie der Welle (3) verläuft, und zwar derart, dass sich die Kontaktfläche (18) in Richtung der Mittellinie der Welle (3) in zunehmender Entfernung von der Kontaktfläche (19) des Kupplungsstabs (12) befindet.

## Revendications

1. Embrayage à roue libre (4) pour relier un arbre entraîné par moteur (3) à un élément entraîné (6) dans lequel lorsque le moteur (1) est arrêté, ledit élément entraîné (6) peut tourner librement, ledit arbre entrainé (3) étant pourvu de plans (11) pour coopérer avec des organes d'accouplement positionnés à l'opposé (12) étant montés sur un disque (7) qui est monté à rotation sur l'arbre entraîné (3), de telle sorte qu'ils peuvent se déplacer vers l'intérieur et vers l'extérieur, de telle sorte que dans la position vers l'extérieur, lesdits organes d'accouplement (12) sont partiellement reçus dans un organe de réception relié audit élément entraîné (6), moyennant quoi ledit arbre entraîné par moteur (3) est pourvu d'une portion aplatie (10) avec deux surfaces de contact planes (11) opposées l'une à l'autre, lesdites surfaces de contact contre chacune desquelles un plan de contact plat (13) d'un organe d'accouplement (12) peut être lorsque le moteur (1) est arrêté, **caractérisé en ce que**, lorsque le moteur est marche, l'arbre tournera sur un angle donné de telle sorte que lesdits organes d'accouplement (12) sont déplacés vers l'extérieur et une came (14) de chaque organe d'accouplement (12) sera reçue dans un creux (15) agencé dans la paroi intérieure (16) de l'organe de réception ayant la forme d'une pièce cylindrique (17) reliée audit élément entraîné (6), au moins une partie du plan de contact (18) dudit disque (7), venant en contact avec un organe d'accouplement (12), fait un angle entre 4 et 10° avec la surface de contact (19) dudit organe d'accouplement (12) s'étendant perpendiculairement à l'axe dudit arbre (3), de telle sorte que ladite surface de contact (18) dans la direction de l'axe dudit arbre (3) est à une distance croissante de la surface de contact (19) dudit organe d'accouplement (12).
